# EUROPEAN PATENT APPLICATION

(11) **EP 3 982 288 A1**
(43) Date of publication of application: **13.04.2022**
(21) Application number: 20201152.4
(22) Date of filing: 09.10.2020
(51) Int. Cl.: G06K 9/00

(54) **METHOD FOR IDENTIFYING AN OBJECT, COMPUTER PROGRAM FOR CARRYING OUT THE METHOD AND SYSTEM**

(71) Applicant: Fresenius Medical Care Deutschland GmbH, 61352 Bad Homburg (DE)
(72) Inventor: PAETZOLD, Ingmar, 63743 Aschaffenburg (DE)
(74) Representative: Ricker, Mathias

(57) **Abstract**

A method for identifying an object comprises the following steps (1) to (4) of
- determining whether an image of a handwritten arbitrary marker contained in a first image of an identifier being provided on a first object or being supposed to be provided on the first object and containing the image of the handwritten arbitrary marker fulfills a predetermined condition, and outputting an instruction in order to cause an output device to output information that the handwritten arbitrary marker is not valid, if the image of the handwritten arbitrary marker does not fulfill the predetermined condition (S1),
- performing a comparison using the first image and a second image of a portion of a second object which contains a marker in order to determine whether the second image contains an image of the identifier (S2),
- identifying the second object as the first object, if the second image contains the image of the identifier or determining that the second object is different from the first object, if the second image does not contain the image of the identifier (S3), and
outputting an instruction to a device in order to cause the device to perform a specific function, if the second object is identified as the first object, or outputting an instruction to the device in order to cause the device to perform a predetermined function, if it is determined that the second object is different from the first object (S4),
wherein the steps (S1) to (S4) are carried out by at least one data processing apparatus.

## Description

The present invention relates to a method for identifying an object, a computer program for carrying out the method and a system.

In order to identify or authenticate an object or to uniquely assign an object to a specific person, the object is typically provided with an identifier which identifies the object or a group of objects having certain characteristics in common. Examples for objects which are identified with such an identifier are person, papers, files, file folders, data storage mediums and identity cards. Known identifiers include (machine-) readable digits or letters, QR codes, bar codes and RFID tags which are attached to the objects to be identified or authenticated.

The patterns of the QR codes and of the bar codes are typically generated by a computer system and printed either directly on the object or on a label which is thereafter attached to the object, and the RFID tags are typically attached to the objects.

Meta data relating to the object such as the name of the object are stored in a data base together with the identifier, and when the identifier of an object is read with a corresponding sensing device, the meta data assigned to the object can be retrieved from the data base.

In clinical environments, objects to be identified or to be uniquely assigned to a specific person may be e.g. drugs or auxiliary means such as filters, hoses, bags, pillboxes, prostheses and laboratory samples. Furthermore, laboratory tools and devices can also be labeled by an identifier.

By assigning an object to a specific patient or by assigning meta data such as used/unused to an object, it can be ensured that objects are not mixed up between different patients or that objects which have already been used are used again, and hence, intolerance problems can be avoided.

In addition, in some facilities it has to be ensured, for example for safety reasons, that access to specific sections or rooms of the facility or access to specific functions of devices is only granted to authorized persons. For example, in facilities such as in clinical environments, the access authorization to specific sections or rooms of the clinic or to specific functions of medical devices may depend on the status of the person, e.g. whether the person is a patient, a medical staff member, a physician, a visitor, a technical staff member, or the like. In this case the access authorization can e.g. be granted or refused based on the meta data, namely the status of the person, assigned to identifiers including unique biometric features such as fingerprints, face, voice and the like of the specific person, passwords to be entered by the person into an input system, or objects carried by the person such as keys or identity cards.

All of the above measures have in common that for identifying an object or assigning an object to a specific person additional devices such as cameras, input terminals, or identification objects, or in case of bar codes or QR codes printers are needed. In addition, security against forgery is only given with biometric procedures. However, the latter implies the usage of personal information, such as voice patterns, fingerprints, face images and the like, that is particularly sensitive and therefore worth protecting and highly regulated.

An object of the present invention is to provide a technique for identifying an object, by which the above described deficiencies of the known techniques are overcome.

The object is achieved by the subject matters of the independent claims. Further preferred embodiments of the invention are subject of the dependent claims.

A method for identifying an object according to an embodiment comprises the steps of determining whether an image of a handwritten arbitrary marker contained in a first image of an identifier being provided on a first object or being supposed to be provided on the first object and containing the image of the handwritten arbitrary marker fulfills a predetermined condition, and outputting an instruction in order to cause an output device to output information that the handwritten arbitrary marker is not valid, if the image of the handwritten arbitrary marker does not fulfill the predetermined condition (S1), performing a comparison using the first image and a second image of a portion of a second object which contains a marker in order to determine whether the second image contains an image of the identifier (S2), identifying the second object as the first object, if the second image contains the image of the identifier or determining that the second object is different from the first object, if the second image does not contain the image of the identifier (S3), and outputting an instruction to a device in order to cause the device to perform a specific function, if the second object is identified as the first object, or outputting an instruction to the device in order to cause the device to perform a predetermined function, if it is determined that the second object is different from the first object (S4), wherein the steps (S1) to (S4) are carried out by at least one data processing apparatus.

According to the method for identifying an object, a handwritten and substantially arbitrary marker is used as the identifier. Hence, no code generator and no printer are needed to provide the object with the identifier. Furthermore, since an image of the identifier and an image of the marker are compared in order to determine whether the second image is the first image or not, transfer errors, which might occur when e.g. an object is handwritten marked with a predetermined identifier, can be avoided. In addition, since the identifier is provided by handwritten marking and must fulfill the predetermined condition to be accepted, the identifier is unique, and hence forgery-proof. Accordingly, the security in terms of access authorization can be increased by using the handwritten arbitrary marker as identifier.

According to an embodiment, determining whether an image of a handwritten arbitrary marker contained in a first image of an identifier being provided on the first object or being supposed to be provided on the first object and containing the image of the handwritten arbitrary marker fulfills a predetermined condition comprises handwritten marking of the first object with the identifier including providing a handwritten arbitrary marker on the first object, and capturing the first image of the identifier provided on the first object or being supposed to be provided on the first object using a first image capturing device, and performing the comparison using the first image and the second image comprises capturing the second image of the portion of the second object which contains the marker using a second image capturing device.

The predetermined condition can require that the image of the handwritten arbitrary marker has a predetermined outer shape and/or that the image of the handwritten arbitrary marker contains a predetermined number of lines and/or that the image of the handwritten arbitrary marker includes a predetermined number of lines that are arranged in a predetermined pattern and/or that the image of the handwritten arbitrary marker includes a predetermined number of lines that have predetermined shapes and/or that a predetermined area having a substantially uniform color is provided around the image of the handwritten arbitrary marker and/or that the image of the handwritten arbitrary marker satisfies a predetermined complexity.

According to a preferred embodiment, the method for identifying an object further comprises assigning meta data to the first image or to data representing the first image and storing, in association with each other, the first image and the assigned meta data in a data base, or storing, in association with each other, the data representing the first image and the assigned meta data in the data base, wherein outputting an instruction to a device in order to cause the device to perform a specific function, if the second object is identified as the first object, comprises outputting an instruction to the device in order to cause the device to perform a specific function corresponding to the meta data assigned to the first image or to the data representing the first image and stored in the data base.

Preferably, the first image capturing device and/or the second image capturing device are configured as a smartphone (including tablets and other similar devices), wherein on the first image capturing device a software is installed which automatically assigns predetermined meta data to the first image or to data representing the first image and/or which allows a user to assign meta data to the first image or to the data representing the first image. This embodiment is advantageous in that nowadays nearly everyone continuously carries his smartphone and has a pen available. Accordingly, the method can be easily performed without the need of further articles.

According to an embodiment, the first image capturing device and/or the second image capturing device have a display for displaying in real time the field of view of the respective image capturing device, wherein a frame is displayed on the display for indicating that the real time image of the identifier and/or the real time image of the second image of the portion of the second object which contains the marker is to be arranged within the frame when capturing the first image and/or the second image, and/or wherein an identifying information is displayed on the display for providing an orientation guide when capturing the first image and/or the second image. The second image capturing device can be part of an automated process line for optical detection of objects and their identification by the marker.

Preferably, the meta data include at least one of the group consisting of a name of a user, a name of patient of a clinic, medical staff member, physician, visitor, technical staff member, the position at which the first image has been captured, a relative position between the first image capturing device and image-captured object, a temperature and other environmental data (air pressure, light, sound, etc.) at the position and time at which the first image has been captured, an indication whether the corresponding object has been used or has not been used, an authorization for entering a specific section or a specific room of a clinic, and an authorization for accessing specific functions of specific medical devices.

The first image and the corresponding assigned meta data, which are stored in association with each other in the data base, and/or the data representing the first image and the corresponding assigned meta data, which are stored in the data base, can be automatically or manually erased from the data base after a predetermined time has elapsed since the storing in the data base. Aditionally or alternatively, the meta data can be erased when the action triggered by recognizing the second object by its identifier has been successfully performed.

According to a preferred embodiment, a plurality of different images and a plurality of corresponding meta data, including the first image and the meta data assigned to the first image are stored, in association with each other, in the data base and/or a plurality of different data representing different images and corresponding meta data, including the data representing the first image and the meta data assigned to the data representing the first image, are stored, in association with each other, in the data base, and the step of performing a comparison using the first image and the second image in order to determine whether the second image contains an image of the identifier comprises accessing the data base for comparing the second image with the plurality of different images stored in the data base or for comparing data representing the second image with the plurality of different data representing different images stored in the data base.

Preferably, providing the handwritten arbitrary marker on the first object comprises drawing a graphic marker with a replaceable pen.

According to an embodiment, the replaceable pen can be configured such that a detection of the handwritten arbitrary marker is only possible within a limited period of time after the graphic marker has been drawn.

According to another embodiment, the replaceable pen is configured such that the handwritten arbitrary marker, completely or partially, disappears or at least changes when irradiated with a predetermined radiation, e.g. light, a predetermined number of times when capturing the second image the predetermined number of times.

Preferably, providing the handwritten arbitrary marker on the first object comprises providing a label, handwritten marking of the label with the handwritten arbitrary marker, and attaching the label to the first object.

Providing the label can comprise providing a label having a frame printed thereon for indicating that the handwritten arbitrary marker has to be provided within the frame and/or providing a label having an identifying information printed thereon for providing an orientation guide.

According to a preferred embodiment, performing the comparison using the first image and the second image comprises performing predetermined image processing on the first and second images so as to obtain first and second processed images.

According to an embodiment, capturing the first image of the identifier comprises capturing a first color image of the identifier and/or capturing the second image of a portion of the second object which contains the marker comprises capturing a second color image of the portion of the second object which contains a marker, and performing predetermined image processing on the first and second color images so as to obtain first and second processed images comprises transforming the first color image and/or the second color image into a grayscale image and setting the intensity values of pixels of the first color image and/or the second color image that are brighter than a predetermined threshold value to a highest brightness value while remaining the intensity values of the other pixels of the first color image and/or the second color image unchanged.

According to another embodiment, capturing the first image of the identifier comprises capturing a first image containing an image of a frame which surrounds an image of the handwritten arbitrary marker or an image of other parts of the handwritten arbitrary marker and capturing the second image of a portion of a second object which contains a marker comprises capturing a second image containing an image of a frame which surrounds an image of the marker or an image of other parts of the marker, and performing predetermined image processing on the first and second images so as to obtain first and second processed images comprises processing the first image and the second image such that outer edges of the first image and of the second image which are defined by the respective images of the respective frames of the first and the second image are straightened.

According to yet another embodiment, performing predetermined image processing on the first and second images so as to obtain first and second processed images comprises processing the first and second images such that the first and second images have a same image resolution.

Performing the comparison using the first image and the second image can also comprise determining the percentage of correlation of the pixels of the first and second processed images and determining that the second image contains an image of the identifier, if the percentage of correlation is higher than a predetermined threshold.

According to a preferred embodiment, performing the comparison using the first image and the second image comprises comparing the first and second processed images using an artificial neural network trained for image comparison.

According to another preferred embodiment, performing the comparison using the first image and the second image comprises automatically detecting characteristic features contained in the first and second processed images using an algorithm, in particular the scale-invariant feature transform algorithm, and comparing the characteristic features detected in the first processed image and the characteristic features detected in the second processed image.

According to yet another preferred embodiment, performing the comparison using the first image and the second image comprises determining a respective number of respective lines contained in the first and second processed images, a respective length and a respective position of the respective lines contained in the first processed image and the second processed image, respectively, deriving a respective code for the first and second processed images based on the respective number of lines, the length of the respective lines, the angles between lines, and the respective positions of the lines contained in the first processed image and in the second processed image, respectively, and comparing the code derived for the first processed image and the code derived for the second processed image.

A computer program according to an embodiment comprises instructions which, when the program is executed by at least one computer, cause the at least one computer to carry out at least parts of the method steps for identifying an object described above

A system according to an embodiment comprises a first smartphone, a second smartphone, a server system comprising a memory for storing a data base, and a device to be controlled by the server system, wherein the first smartphone, the second smartphone, the server system and the device to be controlled by the server system are configured to communicate with each other, the first smartphone is configured to capture a first image of an identifier provided on a first object or supposed to be provided on the first object, wherein the first image contains an image of a handwritten arbitrary marker, and the first smartphone is further configured to determine whether the image of the handwritten arbitrary marker fulfills a predetermined condition, and to output an information on a display of the first smartphone that the handwritten arbitrary marker is not valid, if the image of the handwritten arbitrary marker does not fulfill the predetermined condition, to automatically assign meta data to the first image and to allow a user to assign meta data to the first image using a software installed on the first smartphone, or to generate data representing the first image based on the first image, to automatically assign meta data to the data representing the first image and to allow the user to assign meta data to the data representing the first image, and to transmit the first image together with the meta data assigned to the first image to the server system for storing, in association with each other, the first image and the assigned meta data in the data base of the server system, or to transmit the data representing the first image together with the meta data assigned to the first image to the server system for storing, in association with each other, the data representing the first image and the assigned meta in the data base of the server system, wherein the second smartphone (or automated camera system) is configured to capture a second image of a portion of a second object which contains a marker and to transmit the second image or data representing the second image generated by the second smartphone to the server system, wherein the server system is configured to generate the data representing the first image based on the first image transmitted from the first smartphone and to store the data representing the first image and the meta data assigned to the first image, in association with each other, in the data base, to generate the data representing the second image based on the second image transmitted from the second smartphone and to compare the first image and the second image or to compare the data representing the first image and the data representing the second image in order to determine whether the second image contains an image of the identifier, to identify the second object as the first object, if the second image contains the image of the identifier or to determine that the second object is different from the first object, if the second image does not contain the image of the identifier, and to transmit an instruction to the device to be controlled by the server system in order to cause the device to perform a specific function corresponding to the meta data assigned to the first image or to the data representing the first image and stored in the data base, if the second object is identified as the first object, or to transmit an instruction to the device to be controlled by the server system in order to cause the device to perform a predetermined function, if it is determined that the second object is different from the first object.

Further embodiments and other objects, advantages and features of the present invention will become apparent from the following detailed description of the invention, the illustration of particular embodiments and the accompanying figures, in which
Fig. 1 shows a schematic view of a system according an embodiment, and
Fig. 2 shows a flow chart for illustrating a method for identifying an object according an embodiment.

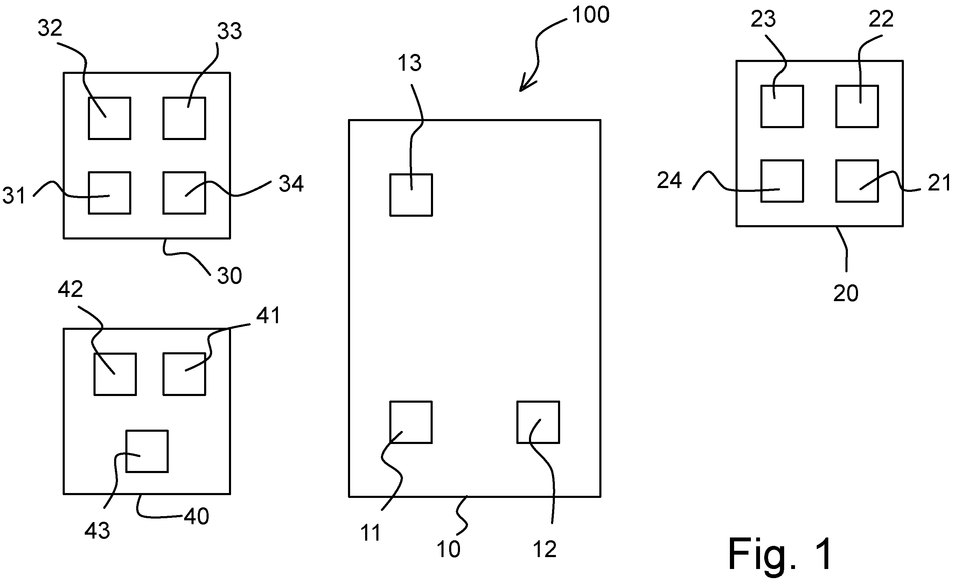

Fig. 1 shows a schematic view of a system according to an embodiment. The system 100 comprises a server system 10, a first image capturing device 20, a second image capturing device 30 and a device 40 to be controlled by the server system 10. The server system 10 comprises a central processing unit 11, a memory 12 for storing a database, and a communication interface 13. The first image capturing device 20 comprises a central processing unit 21, a memory 22, a display 23 and a communication interface 24. The second image capturing device 30 comprises a central processing unit 31, a memory 32, a display 33 and a communication interface 34. The central processing unit 11 of the server system 10, the central processing unit 21 of the first image capturing device 20, and the central processing unit 31 of the second image capturing device 30 are respective data processing apparatuses. The device 40 to be controlled by the server system 10 comprises a central processing unit 41, a memory 42 and a communication interface 43. The first image capturing device 20 and the second image capturing device 30 are preferably configured as a smart phone. The server system 10, the first image capturing device 20, the second image capturing device 30 and the device 40 to be controlled by the server system 10 are configured to communicate with each other by means of the respective communication interfaces 13, 24, 34 and 43 in order to exchange data. The respective communication interfaces 13, 24, 34 and 43 may be configured to perform the data exchange by a wireless data transfer using e.g. a mobile network or wireless LAN, or by a wired data transfer using a data cable.

The first image capturing device 20 is configured to capture a first image of an identifier provided on a first object or supposed to be provided on the first object, wherein the first image contains an image of a handwritten arbitrary marker. Examples for the first object include a person, papers, files, file folders, data storage mediums, identity cards and the like.

The first image capturing device 20, in particular the central processing unit 21 thereof, is further configured to determine whether the image of the handwritten arbitrary marker fulfills a predetermined condition, and to output an information on the display 23 that the handwritten arbitrary marker is not valid, if the image of the handwritten arbitrary marker does not fulfill the predetermined condition. The predetermined condition can e.g. require that the image of the handwritten arbitrary marker has a predetermined outer shape and/or that the image of the handwritten arbitrary marker contains a predetermined number of lines and/or that the image of the handwritten arbitrary marker includes a predetermined number of lines that are arranged in a predetermined pattern and/or that the image of the handwritten arbitrary marker includes a predetermined number of lines that have predetermined shapes and/or that a predetermined area having a substantially uniform color is provided around the image of the handwritten arbitrary marker and/or that the image of the handwritten arbitrary marker satisfies a predetermined complexity.

Furthermore, the first image capturing device 20 is configured to automatically assign meta data to the first image and to allow a user to assign meta data to the first image using a dedicated software installed in the memory 22 of the first image capturing device 20. The meta data which are automatically assigned by the first image capturing device 20 to the first image can include at least one of the group consisting of a name of a user of the first image capturing device 20, which is known to the first image capturing device 20 by means of a log in of the user in the dedicated software, the position at which the first image has been captured, a relative position between image-capturing device and image-captured object, and a temperature and other environmental data (air pressure, light, sound, etc.) at the position and time at which the first image has been captured. The meta data which the user can assign to the first image can include at least one of the group consisting of an indication whether the corresponding first object has been used or has not been used, an authorization for entering a specific section or a specific room of a clinic, and an authorization for accessing specific functions of a medical device, a name of a patient of a clinic, medical staff member, physician, visitor of the clinic, technical staff member, and the like.

Alternatively, or additionally, the first image capturing device 20, in particular the central processing unit 21 thereof, is configured to generate data representing the first image based on the first image, to automatically assign meta data to the data representing the first image and to allow the user to assign meta data to the data representing the first image.

Furthermore, the first image capturing device 20 is configured to transmit the first image together with the meta data assigned to the first image to the server system 10 for storing, in association with each other, the first image and the assigned meta data in the data base stored in the memory 12 of the server system 10,

Alternatively, or additionally, the first image capturing device 20 is configured to transmit the data representing the first image together with the meta data assigned to the first image to the server system 10 for storing, in association with each other, the data representing the first image and the assigned meta in the data base of the memory 12 of the server system 10.

The second image capturing device 30 is configured to capture a second image of a portion of a second object which contains a marker and to transmit the second image or data representing the second image generated by the second image capturing device 30, which may be a smartphone or another camera system, to the server system 10.

Generating the data representing the first image and generating the data representing the second image may include predetermined image processing performed by the first image capturing device 20 / the second image capturing device 30 / the server system 10 on the first and second images, respectively, so as to obtain first and second processed images.

The displays 23, 33 of the first and second image capturing devices 20, 30 are configured for displaying in real time the field of view of the respective image capturing device 20, 30, wherein a frame is displayed on the display 23, 33 for indicating that the real time image of the identifier and/or the real time image of the second image of the portion of the second object which contains the marker is to be arranged within the frame when capturing the first image and/or the second image, and/or wherein an identifying information is displayed on the display 23, 33 for providing an orientation guide when capturing the first image and/or the second image.

The server system 10, in particular the central processing unit 11 thereof, is configured to generate the data representing the first image based on the first image transmitted from the first image capturing device 20 and to store the data representing the first image and the meta data assigned to the first image, in association with each other, in the data base, and to generate the data representing the second image based on the second image transmitted from the second image capturing device 30 and to compare the first image and the second image or to compare the data representing the first image and the data representing the second image in order to determine whether the second image contains an image of the identifier.

Based on the comparison, the central processing unit 11 of the server system 10 is configured to identify the second object as the first object, if the second image contains the image of the identifier, or to determine that the second object is different from the first object, if the second image does not contain the image of the identifier.

Furthermore, the server system 10 is configured to transmit an instruction to the device 40 to be controlled by the server system 10 in order to cause the device 40 to perform a specific function corresponding to the meta data assigned to the first image or to the data representing the first image and stored in the data base, if the second object is identified as the first object, and/or to transmit an instruction to the device 40 to be controlled by the server system 10 in order to cause the device 40 to perform a predetermined function, if it is determined that the second object is different from the first object.

According to an embodiment, the device 40 to be controlled by the server system 10 is configured as a medical device, preferably as a dialysis device. In this case, the meta data may include different user groups such as patients of the clinic in which the medical device is installed, medical staff members, physicians, visitors of the clinic, technical staff members, and the like, to which different authorizations for executing specific device functions are assigned by means of the meta data to the corresponding first image, i.e. the first object having a corresponding identifier. Accordingly, the display and control element options of the device 40 to be controlled by the server system 10 can be controlled by means of the fact that the server system 10 is configured to transmit an instruction to the device 40 to be controlled by the server system 10 in order to cause the device 40 to perform a specific function corresponding to the meta data assigned to the first image or the data representing the first image and stored in the database. In addition, in view of the above configuration, the authorization for executing specific functions of the device 40 to be controlled by the server system 10 can be limited to specific user groups.

On the other hand, if it is determined that the second object is different from the first object, i.e., the person corresponding to the first object being part of one of the user groups that are not authorized for operating the device 40 to be controlled by the server system 10, the instruction transmitted by the server system 10 to the device 40 in order to cause the device 40 to perform a predetermined function can include an instruction to the device 40 to emit an alarm sound by a loudspeaker of the device 40, to display an error message on a display of the device 40, to shut down the device 40, and the like.

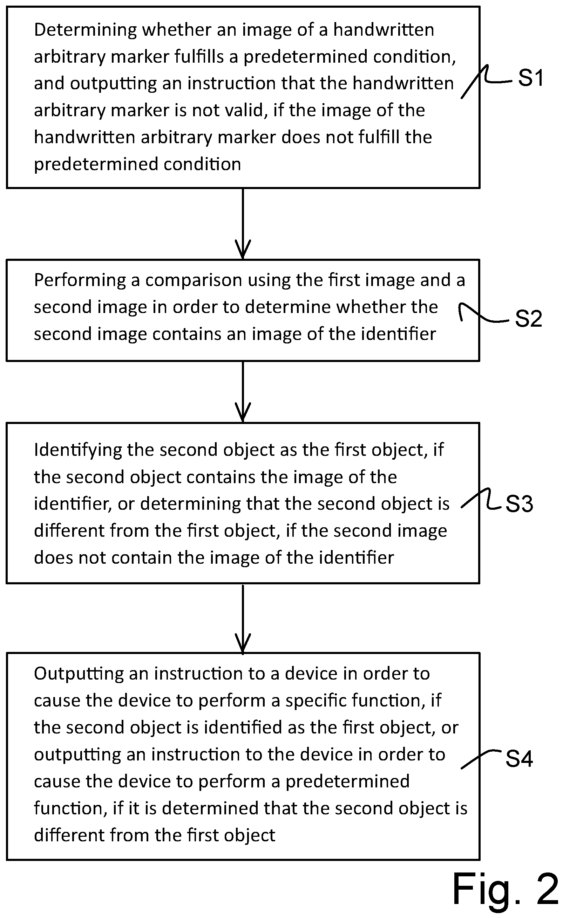

Fig. 2 shows a flow chart for illustrating a method for identifying an object according to an embodiment, which is partially carried out by the system 100. The method begins with step S1, in which it is determined by the central processing unit 21 of the first image capturing device 20 whether an image of a handwritten arbitrary marker contained in a first image of an identifier being provided on a first object or being supposed to be provided on the first object and containing the image of the handwritten arbitrary marker fulfills a predetermined condition, and instructions are outputted to the display 23 of the first image capturing device 20 to output information that the handwritten arbitrary marker does not fulfill the condition, if the image of the handwritten marking does not fulfill the predetermined condition.

In order to provide the identifier on the first object, a handwritten marking of the first object with the identifier can be performed, including providing a handwritten arbitrary marker on the first object by a user using a replaceable pen. According to an embodiment, the replaceable pen is an arbitrary pen. According to another embodiment, the replaceable pen is configured such that a detection of the handwritten arbitrary marker is limited in time, i.e. that the handwritten marker automatically disappears. According to yet another embodiment, the replaceable pen is configured such that the handwritten marker disappears, completely or partially, or at least changes when irradiated with radiation, e.g. light, emitted from the second image capturing device 30 a predetermined number of times when capturing the second image the predetermined number of time.

The handwritten arbitrary marker can be a drawing, a series of numbers or a combination thereof. In particular, the handwritten arbitrary marker can be an arbitrary marker within predetermined conditions. Generally, the predetermined conditions can be defined such that capturing an image of the identifier and processing of the captured image can be facilitated. For example, the predetermined conditions can include the condition that the handwritten arbitrary marker must have a predetermined shape. In this case, the predetermined conditions can be that the outer shape of the handwritten marker must be a rectangle or a square. Alternatively, or additionally, the predetermined conditions can include the condition that the handwritten marker must contain a predetermined number of lines and/or the condition that the lines must be arranged in a predetermined pattern and/or must have predetermined shapes. Alternatively, or additionally, the predetermined conditions can include the condition that a predetermined area, which does not contain a part of the handwritten marking such as a rectangular frame having a predetermined thickness and substantially uniform color, is provided around the handwritten arbitrary marker. In any case, the predetermined conditions include the condition that the handwritten arbitrary marker satisfies a predetermined complexity. Since the identifier is provided by handwritten marking using a pen and must fulfill the predetermined condition, in particular the predetermined condition regarding the predetermined complexity, to be accepted, the identifier is unique, and hence forgery-proof.

According to an embodiment, the identifier, in particular the handwritten arbitrary marker, is directly applied to the first object. This embodiment is advantageous in that only a pen is needed to provide the first object with the handwritten arbitrary marker, i.e. to mark the first object. In case the object is a person, the identifier can be applied directly on the skin of the person or on a part of the clothing that is typically permanently worn by the person for a certain period of time such as on a trouser or a shirt of the person.

According to another embodiment, a label is provided, and the identifier, i.e. the handwritten arbitrary marker, is provided on the label. In one embodiment, at first the handwritten arbitrary marker is provided on the label, i.e. the label is handwritten marked with the identifier, and then the label having the handwritten arbitrary marker provided thereon is attached to the first object. In another embodiment, at first the label is attached to the first object, and then the label is handwritten marked with the identifier. Preferably, the label is an adhesive label, wherein attaching the label to the first object includes sticking the label to the first object. The label can be a blank label or a label having a preprint on a surface thereof. The preprint can e.g. include a frame and/or an identifying information. The frame can have the function of indicating to the user that the handwritten marking has to be made within the frame. The identifying information can e.g. include information regarding an orientation of the label.

Preferably, the first image of the identifier provided on the first object or being supposed to be provided on the first object is captured using the first image capturing device 20.

Then, a comparison is performed in step S2 using the first image and a second image of a portion of a second object which contains a marker in order to determine whether the second image contains an image of the identifier.

The second image is preferably captured using the second image capturing device 30. However, the second image can also be captured using the first image capturing device 20. In this case, the first image capturing device 20 and the second image capturing device 30 are the same device.

The comparison performed in step S2 is performed by the server system 10, in particular by the central processing unit 11 thereof, and can include performing predetermined image processing on the first and second images so as to obtain first and second processed images. Since the comparison of step S2 is performed by the server system 10, the first image and the second image or data representing and describing, respectively, the first and second images are transmitted from the first and second image capturing devices 20, 30 to the server system 10. The data representing the first and second images can e.g. be derived from the processed first and second images.

Performing the predetermined image processing is in particular advantageous, because the first and the second image are expected to be captured with different cameras at different angles and under different lighting conditions. In terms of processing of the first image, filtering may be applied to the image data of the first image such that mainly the information corresponding to the handwritten arbitrary marker remains.

In one embodiment, the predetermined image processing on the first image is performed by the first image capturing device 20, in particular by the central processing unit 21 thereof, and then the first processed image is transmitted from the first image capturing device 20 to the server system 10. In another embodiment, the first image is transmitted from the first image capturing device 20 to the server system 10, and the server system 10, in particular the central processing unit 11 thereof, performs the predetermined image processing on the first image. The same applies analogously to the predetermined image processing on the second image.

In an embodiment, in which the first and second image capturing devices 20, 30 are configured as color cameras, the first image is captured as a first color image and the second image is captured as a second color image. In this case, performing the predetermined image processing on the first and second color images so as to obtain first and second processed images comprises transforming the first color image and the second color image into a grayscale image and setting the intensity values of pixels of the first color image and/or the second color image that are brighter than a predetermined threshold value to a highest brightness value while remaining the intensity values of the other pixels of the first color image and the second color image unchanged.

Alternatively, or additionally, when capturing the first image comprises capturing a first image containing an image of a frame which surrounds an image of the handwritten arbitrary marker or an image of other parts of the handwritten arbitrary marker and capturing the second image comprises capturing a second image containing an image of a frame which surrounds an image of the marker or an image of other parts of the marker, then the performing predetermined image processing on the first and second images so as to obtain first and second processed images may comprise processing the first image and the second image such that outer edges of the first image and of the second image which are defined by the respective images of the respective frames of the first and the second image are straightened.

Alternatively, or additionally, the performing of the predetermined image processing on the first and second images so as to obtain first and second processed images may comprise processing the first and second images such that the first and second images have a same image resolution.

Performing the comparison using the first image and the second image can also comprise determining the percentage of correlation of the pixels of the first and second processed images and determining that the second image contains an image of the identifier, if the percentage of correlation is higher than a predetermined threshold.

Furthermore, performing the comparison using the first image and the second image can comprise comparing the first and second processed images using an artificial neural network trained for image comparison.

Alternatively, performing the comparison using the first image and the second image may comprise automatically detecting characteristic features contained in the first and second processed images using an algorithm, in particular the scale-invariant feature transform algorithm, and comparing the characteristic features detected in the first processed image and the characteristic features detected in the second processed image.

In addition, performing the comparison using the first image and the second image may comprise determining a respective number of respective lines contained in the first and second processed images, a respective length and a respective position of the respective lines contained in the first processed image and the second processed image, respectively, deriving a respective code for the first and second processed images based on the respective number of lines, the length of the respective lines and the respective positions of the lines contained in the first processed image and in the second processed image, respectively, and comparing the code derived for the first processed image and the code derived for the second processed image.

Based on the comparison of step S2, the second object is identified in step S3 as the first object, if the second image contains the image of the identifier, or it is determined that the second object is different from the first object, if the second object does not contain the image of the identifier.

Thereafter, in step S4, an instruction to the device 40 to be controlled by the server system 10 is output from the server system 10 in order to cause the device 40 to perform a specific function, if the second object is identified to be the first object, or an instruction to the device 40 is output by the server system 10 in order to cause the device 40 to perform a predetermined function, if it is determined that the second object is different from the first object.

Preferably, the method for identifying an object further comprises assigning meta data to the first image or to the data representing the first image and storing, in association with each other, the first image and the assigned meta data in the data base of the server system 10, or storing, in association with each other, the data representing the first image and the assigned meta data in the data base of the server system 10.

In this case, the outputting of the instruction to the device 40 in order to cause the device 40 to perform the specific function, if the second object is identified as the first object, comprises outputting an instruction to the device 40 in order to cause the device 40 to perform a specific function corresponding to the meta data assigned to the first image or to the data representing the first image and stored in the data base of the server system 10.

In case the first image capturing device 20 and/or the second image capturing device 30 are configured as a smartphone, a software may be installed on the first image capturing device 20 which automatically assigns predetermined meta data to the first image or to data representing the first image and/or which allows the user to assign meta data to the first image or to the data representing the first image.

Furthermore, the first image capturing device 20 and/or the second imaging capturing device 30 may have a display 23, 33 for displaying in real time the field of view of the respective image capturing device 20, 30, wherein a frame is displayed on the display 23, 33 for indicating that the real time image of the identifier and/or the real time image of the second image of the portion of the second object which contains the marker is to be arranged within the frame when capturing the first image and/or the second image, and/or wherein an identifying information is displayed on the display 23, 33 for providing an orientation guide when capturing the first image and/or the second image.

Preferably, the meta data include at least one of the group consisting of a name of a user, a name of patient of a clinic, medical staff member, physician, visitor, technical staff member, the position at which the first image has been captured, a relative position between image-capturing device and image-captured object, a temperature and other environmental data (air pressure, light, sound, etc.) at the position and time at which the first image has been captured, an indication whether the corresponding object has been used or has not been used, an authorization for entering a specific section or a specific room of a clinic, and an authorization for accessing specific functions of a medical device.

In one embodiment, the first image and the corresponding assigned meta data, which are stored in association with each other in the data base of the server system 10, and/or the data representing the first image and the corresponding assigned meta data, which are stored in the data base of the server system 10, are erased from the data base after a predetermined time has elapsed since the storing in the data base.

Furthermore, a plurality of different images and a plurality of corresponding meta data, including the first image and the meta data assigned to the first image are stored, in association with each other, in the data base and/or a plurality of different data representing different images and corresponding meta data, including the data representing the first image and the meta data assigned to the data representing the first image, are stored, in association with each other, in the data base. In this case, the step S2 of performing a comparison using the first image and the second image in order to determine whether the second image contains an image of the identifier may comprise accessing the data base for comparing the second image with the plurality of different images stored in the data base or for comparing data representing the second image with the plurality of different data representing different images stored in the data base.

## Claims

1. A method for identifying an object, comprising the following steps (1) to (4):
- determining whether an image of a handwritten arbitrary marker contained in a first image of an identifier being provided on a first object or being supposed to be provided on the first object and containing the image of the handwritten arbitrary marker fulfills a predetermined condition, and outputting an instruction in order to cause an output device (23) to output information that the handwritten arbitrary marker is not valid, if the image of the handwritten arbitrary marker does not fulfill the predetermined condition (S1),
- performing a comparison using the first image and a second image of a portion of a second object which contains a marker in order to determine whether the second image contains an image of the identifier (S2),
- identifying the second object as the first object, if the second image contains the image of the identifier or determining that the second object is different from the first object, if the second image does not contain the image of the identifier (S3), and
outputting an instruction to a device (40) in order to cause the device (40) to perform a specific function, if the second object is identified as the first object, or outputting an instruction to the device (40) in order to cause the device (40) to perform a predetermined function, if it is determined that the second object is different from the first object (S4),
wherein the steps (S1) to (S4) are carried out by at least one data processing apparatus (11, 21, 31).

2. The method for identifying an object, wherein determining whether an image of a handwritten arbitrary marker contained in a first image of an identifier being provided on the first object or being supposed to be provided on the first object and containing the image of the handwritten arbitrary marker fulfills a predetermined condition comprises handwritten marking of the first object with the identifier including providing a handwritten arbitrary marker on the first object, and capturing the first image of the identifier provided on the first object or being supposed to be provided on the first object using a first image capturing device (20), and performing the comparison using the first image and the second image comprises capturing the second image of the portion of the second object which contains the marker using a second image capturing device (30).

3. The method for identifying an object according to claim 2, wherein the predetermined condition requires that the image of the handwritten arbitrary marker has a predetermined outer shape and/or that the image of the handwritten arbitrary marker contains a predetermined number of lines and/or that the image of the handwritten arbitrary marker includes a predetermined number of lines that are arranged in a predetermined pattern and/or that the image of the handwritten arbitrary marker includes a predetermined number of lines that have predetermined shapes and/or that a predetermined area having a substantially uniform color is provided around the image of the handwritten arbitrary marker and/or that the image of the handwritten arbitrary marker satisfies a predetermined complexity.

4. The method for identifying an object according to claim 2 or 3, further comprising assigning meta data to the first image or to data representing the first image and storing, in association with each other, the first image and the assigned meta data in a data base, or storing, in association with each other, the data representing the first image and the assigned meta data in the data base,
wherein outputting an instruction to a device (40) in order to cause the device (40) to perform a specific function, if the second object is identified as the first object, comprises outputting an instruction to the device (40) in order to cause the device (40) to perform a specific function corresponding to the meta data assigned to the first image or to the data representing the first image and stored in the data base.

5. The method for identifying an object according to claim 4, wherein the first image capturing device (20) and/or the second image capturing device (30) are configured as a smartphone, wherein on the first image capturing device (20) a software is installed which automatically assigns predetermined meta data to the first image or to data representing the first image and/or which allows a user to assign meta data to the first image or to the data representing the first image.

6. The method for identifying an object according to claim 5, wherein the first image capturing device (20) and/or the second image capturing device (30) have a display (23, 33) for displaying in real time the field of view of the respective image capturing device (20, 30), wherein a frame is displayed on the display for indicating that the real time image of the identifier and/or the real time image of the second image of the portion of the second object which contains the marker is to be arranged within the frame when capturing the first image and/or the second image, and/or wherein an identifying information is displayed on the display for providing an orientation guide when capturing the first image and/or the second image.

7. The method according to one of claims 4 to 6, wherein the meta data include at least one of the group consisting of a name of a user, a name of patient of a clinic, medical staff member, physician, visitor, technical staff member, the position at which the first image has been captured, a relative position between the first image capturing device (20) and image-captured object, a temperature and other environmental data at the position and time at which the first image has been captured, an indication whether the corresponding object has been used or has not been used, an authorization for entering a specific section or a specific room of a clinic, and an authorization for accessing specific functions of specific medical devices.

8. The method for identifying an object according to one of claims 4 to 7, wherein the first image and the corresponding assigned meta data, which are stored in association with each other in the data base, and/or the data representing the first image and the corresponding assigned meta data, which are stored in the data base, are erased from the data base after a predetermined time has elapsed since the storing in the data base.

9. The method for identifying an object according to one of claims 4 to 8, wherein a plurality of different images and a plurality of corresponding meta data, including the first image and the meta data assigned to the first image are stored, in association with each other, in the data base and/or a plurality of different data representing different images and corresponding meta data, including the data representing the first image and the meta data assigned to the data representing the first image, are stored, in association with each other, in the data base, and the step of performing a comparison using the first image and the second image in order to determine whether the second image contains an image of the identifier comprises accessing the data base for comparing the second image with the plurality of different images stored in the data base or for comparing data representing the second image with the plurality of different data representing different images stored in the data base.

10. The method for identifying an object according to one of claims 4 to 9 wherein providing the handwritten arbitrary marker on the first object comprises drawing a graphic marker with a replaceable pen.

11. The method for identifying an object according to claim 10, wherein the replaceable pen is configured such that a detection of the handwritten arbitrary marker is only possible within a limited period of time after the graphic marker has been drawn.

12. The method for identifying an object according to claim 10 or 11, wherein the replaceable pen is configured such that the handwritten arbitrary marker disappears or at least changes when irradiated with a predetermined radiation a predetermined number of times when capturing the second image the predetermined number of times.

13. The method for identifying an object according to one the claims 4 to 12, wherein providing the handwritten arbitrary marker on the first object comprises
- providing a label,
- handwritten marking of the label with the handwritten arbitrary marker, and
- attaching the label to the first object.

14. The method for identifying an object according to claim 13, wherein providing the label comprises providing a label having a frame printed thereon for indicating that the handwritten arbitrary marker has to be provided within the frame and/or providing a label having an identifying information printed thereon for providing an orientation guide.

15. The method for identifying an object according to one of the claims 4 to 14, wherein performing the comparison using the first image and the second image comprises performing predetermined image processing on the first and second images so as to obtain first and second processed images.

16. The method for identifying an object according to claim 15, wherein capturing the first image of the identifier comprises capturing a first color image of the identifier and/or capturing the second image of a portion of the second object which contains the marker comprises capturing a second color image of the portion of the second object which contains a marker, and performing predetermined image processing on the first and second color images so as to obtain first and second processed images comprises transforming the first color image and/or the second color image into a grayscale image and setting the intensity values of pixels of the first color image and/or the second color image that are brighter than a predetermined threshold value to a highest brightness value while remaining the intensity values of the other pixels of the first color image and/or the second color image unchanged.

17. The method for identifying an object according to claim 15, wherein capturing the first image of the identifier comprises capturing a first image containing an image of a frame which surrounds an image of the handwritten arbitrary marker or an image of other parts of the handwritten arbitrary marker and capturing the second image of a portion of a second object which contains a marker comprises capturing a second image containing an image of a frame which surrounds an image of the marker or an image of other parts of the marker, and performing predetermined image processing on the first and second images so as to obtain first and second processed images comprises processing the first image and the second image such that outer edges of the first image and of the second image which are defined by the respective images of the respective frames of the first and the second image are straightened.

18. The method for identifying an object according to claim 15, wherein performing predetermined image processing on the first and second images so as to obtain first and second processed images comprises processing the first and second images such that the first and second images have a same image resolution.

19. The method for identifying an object according to claim 15, wherein performing the comparison using the first image and the second image comprises determining the percentage of correlation of the pixels of the first and second processed images and determining that the second image contains an image of the identifier, if the percentage of correlation is higher than a predetermined threshold.

20. The method for identifying an object according to claim 15, wherein performing the comparison using the first image and the second image comprises comparing the first and second processed images using an artificial neural network trained for image comparison.

21. The method for identifying an object according to claim 15, wherein performing the comparison using the first image and the second image comprises automatically detecting characteristic features contained in the first and second processed images using an algorithm, in particular the scale-invariant feature transform algorithm, and comparing the characteristic features detected in the first processed image and the characteristic features detected in the second processed image.

22. The method for identifying an object according to claim 15, wherein performing the comparison using the first image and the second image comprises determining a respective number of respective lines contained in the first and second processed images, a respective length and a respective position of the respective lines contained in the first processed image and the second processed image, respectively, deriving a respective code for the first and second processed images based on the respective number of lines, the length of the respective lines, the angles between lines, and the respective positions of the lines contained in the first processed image and in the second processed image, respectively, and comparing the code derived for the first processed image and the code derived for the second processed image.

23. A computer program comprising instructions which, when the program is executed by at least one computer (11, 21, 31), cause the at least one computer (11, 21, 31) to carry out the method of claim 1.

24. A system (100) comprising:
- a first smartphone (20),
- a second smartphone (30),
- a server system (10) comprising a memory (12) for storing a data base, and
- a device (40) to be controlled by the server system (10), wherein
the first smartphone (20), the second smartphone (30), the server system (10) and the device (40) to be controlled by the server system (10) are configured to communicate with each other,
the first smartphone (20) is configured to capture a first image of an identifier provided on a first object or supposed to be provided on the first object, wherein the first image contains an image of a handwritten arbitrary marker, and the first smartphone (20) is further configured
- to determine whether the image of the handwritten arbitrary marker fulfills a predetermined condition, and to output an information on a display (23) of the first smartphone (20) that the handwritten arbitrary marker is not valid, if the image of the handwritten arbitrary marker does not fulfill the predetermined condition,
- to automatically assign meta data to the first image and to allow a user to assign meta data to the first image using a software installed on the first smartphone (20), or
- to generate data representing the first image based on the first image, to automatically assign meta data to the data representing the first image and to allow the user to assign meta data to the data representing the first image, and
- to transmit the first image together with the meta data and the meta data assigned to the first image to the server system (10) for storing, in association with each other, the first image and the assigned meta data in the data base of the server system (10), or
- to transmit the data representing the first image together with the meta data assigned to the first image to the server system (10) for storing, in association with each other, the data representing the first image and the assigned meta in the data base of the server system (10), wherein
the second smartphone (30) is configured to capture a second image of a portion of a second object which contains a marker and to transmit the second image or data representing the second image generated by the second smartphone to the server system (10), wherein
the server system (10) is configured to generate the data representing the first image based on the first image transmitted from the first smartphone (20) and to store the data representing the first image and the meta data assigned to the first image, in association with each other, in the data base,
to generate the data representing the second image based on the second image transmitted from the second smartphone (30) and to compare the first image and the second image or to compare the data representing the first image and the data representing the second image in order to determine whether the second image contains an image of the identifier,
to identify the second object as the first object, if the second image contains the image of the identifier or to determine that the second object is different from the first object, if the second image does not contain the image of the identifier, and
to transmit an instruction to the device (40) to be controlled by the server system (10) in order to cause the device (40) to perform a specific function corresponding to the meta data assigned to the first image or to the data representing the first image and stored in the data base, if the second object is identified as the first object, or to transmit an instruction to the device (40) to be controlled by the server system (10) in order to cause the device (40) to perform a predetermined function, if it is determined that the second object is different from the first object.
